# EUROPEAN PATENT APPLICATION

(11) **EP 3 637 764 A1**
(43) Date of publication of application: **15.04.2020**
(21) Application number: 18804930.8
(22) Date of filing: 22.05.2018
(51) Int. Cl.: H04N 19/107, H04N 19/172, H04N 19/174, H04N 19/65

(54) **VIDEO CODING DEVICE AND VIDEO CODING METHOD**

(30) Priority: 24.05.2017 JP 2017102617
(71) Applicant: NTT Electronics Corporation, Yokohama-shi Kanagawa 221-0031 (JP); Nippon Telegraph And Telephone Corporation, Chiyoda-ku, Tokyo 100-8116 (JP)
(72) Inventor: SHINOZAWA, Keisuke, Yokohama-shi Kanagawa 221-0031 (JP); SATO, Yasuhiko, Yokohama-shi Kanagawa 221-0031 (JP); NAKAMURA, Ken, Musashino-shi Tokyo 180-8585 (JP); ONISHI, Takayuki, Musashino-shi Tokyo 180-8585 (JP)
(74) Representative: Hoffmann Eitle
(86) International application number: PCT/JP2018/019690
(87) International publication number: WO 2018/216695

(57) **Abstract**

In a video coding device 1 using the intra-slice to move an intra-slice region in which intra-coding is performed on a picture-by-picture basis, an intra-slice controller 20 inserts a non-intra-slice picture including no intra-slice region between intra-slice pictures including the intra-slice regions.

## Description

### TECHNICAL FIELD

The present invention relates to a technique of coding a video.

### BACKGROUND ART

In the real-time video communications, it is desired to reduce the time (delay time) from obtainment of a picture on a video transmission side to displaying of the picture on a video reception side. There is known a technique called the intra-slice or the intra-column as one of the techniques for reducing the delay time in coding and decoding of a video.

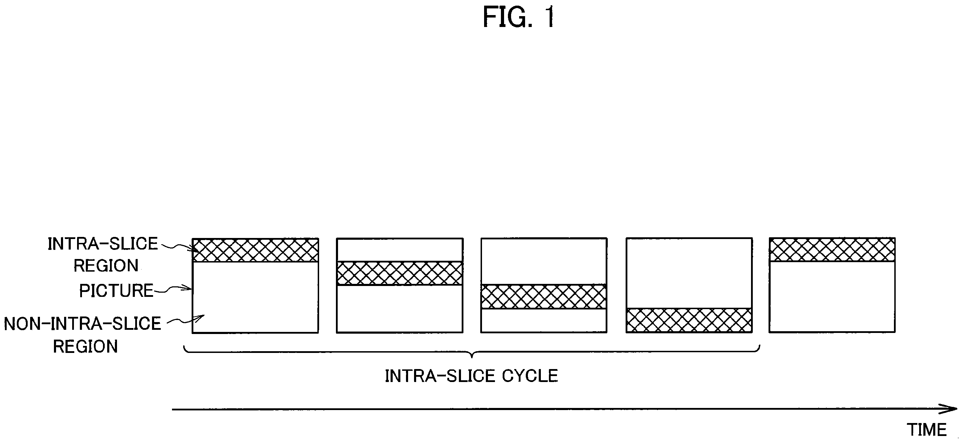

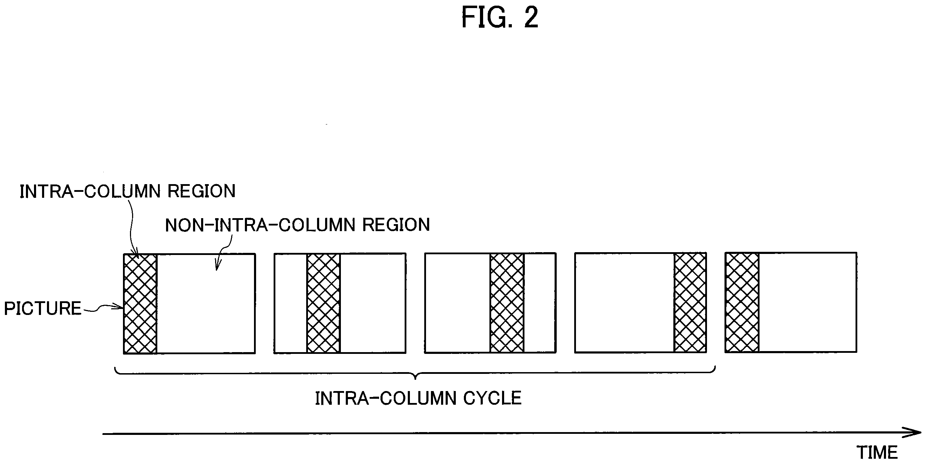

The video coding using the intra-slice does not use an intra-coded picture (I-picture) that is obtained by encoding a coding block independently only within a frame (intra). Instead, an intra-slice region in which a coding block is forcedly intra-coded is moved from the top to the bottom on a picture-by-picture basis, thereby achieving the refresh. Fig. 1 illustrates movement of an intra-slice region. The time when the intra-slice region is moved from the top end to the bottom end is called an intra-slice cycle. Fig. 2 is a diagram illustrating movement of an intra-column region. In the video coding using the intra-column, the intra-column region vertically arranged in a picture is moved from the left end to the right end to achieve the refresh.

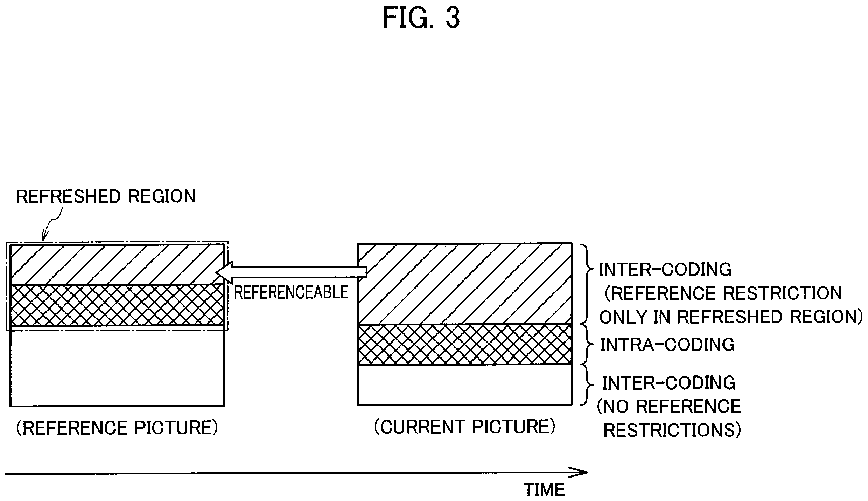

Fig. 3 is a diagram illustrating an overview of the coding processing of a picture including an intra-slice region. In a region above the intra-slice region, inter-coding is performed while allowing a reference to only a refreshed region in a picture for reference (a region through which the intra-slice region already passes in the previous picture) . In the intra-slice region, intra-coding is performed. In a region below the intra-slice region, inter-coding is performed while referring to any region in the picture for reference.

### PRIOR ART DOCUMENT

### PATENT DOCUMENT

Patent document 1: International Publication No. WO 2012/121211

### SUMMARY OF THE INVENTION

### PROBLEM TO BE SOLVED BY THE INVENTION

A coding block included in the intra-slice region is an intra-block on which intra-coding is performed. On the other hand, a non-intra-slice region other than the intra-slice region contains both an intra-block on which intra-coding is performed and an inter-block on which inter-coding is performed. Depending on features of the video, a required bitrate, and so on, the image quality may differ between the intra-slice region and the non-intra-slice region. For this reason, the coding using the intra-slice has a problem that the movement of the intra-slice region can be seen in a decoded video, and the visual image quality may deteriorate in some cases.

The present invention is made in view of the above problem, and an object thereof is to suppress deterioration of the visual image quality in the coding using the intra-slice.

### MEANS FOR SOLVING THE PROBLEM

In order to solve the above problem, a video coding device according to an aspect of the present invention is a video coding device configured to move an intra-slice region in which a coding block is intra-coded on a picture-by-picture basis, including: an intra-slice controller configured to set the intra-slice region in each intra-slice picture; an intra-predictor configured to intra-code a coding block; and an inter-predictor configured to inter-code a coding block, in which the intra-slice controller is configured to insert a non-intra-slice picture including no intra-slice region between the intra-slice pictures.

In order to solve the above problem, a method of video coding according to an aspect of the present invention is a method of video coding involving moving an intra-slice region in which a coding block is intra-coded on a picture-by-picture basis, including the steps of: setting the intra-slice regions in intra-slice pictures; and inserting a non-intra-slice picture including no intra-slice region between the intra-slice pictures.

### EFFECT OF THE INVENTION

According to the present invention, it is possible to suppress deterioration of the visual image quality in the coding using the intra-slice.

### BRIEF DESCRIPTION OF THE DRAWINGS

Fig. 1 is a diagram illustrating a moving intra-slice region.
Fig. 2 is a diagram illustrating a moving intra-column region.
Fig. 3 is a diagram illustrating an overview of coding of a picture including the intra-slice region.
Fig. 4 is a function block diagram illustrating a configuration of a video coding device of an embodiment.
Fig. 5 is a flowchart illustrating a procedure of processing by an intra-slice controller.
Fig. 6 is a diagram illustrating an example in which one non-intra-slice picture for which no intra-slice is used is inserted for every two input pictures.
Fig. 7 is a flowchart illustrating a procedure of processing by a switch.
Fig. 8 is a diagram illustrating an overview of coding of the non-intra-slice picture.
Fig. 9 is a diagram illustrating an overview of another coding of the non-intra-slice picture.
Fig. 10 is a diagram illustrating an arrangement example of the intra-slice regions.
Fig. 11 is a diagram illustrating another arrangement example of the intra-slice regions.

### MODE FOR CARRYING OUT THE INVENTION

Embodiments of the present invention are described below with reference to the drawings. Each embodiment mainly described below is about the "intra-slice" to which the present invention is applied, the intra-slice using a belt-shaped region extending in the transverse direction in a picture as an aggregate of pixels on which intra-coding is forcedly performed. However, the present invention can be also applied to the "intra-column" using a belt-shaped region extending in the vertical direction in a picture. Hereinafter, unless stated otherwise, the intra-slice and the intra-column are not discriminated and are simply referred to as the "intra-slice" while describing the embodiments according to the present invention.

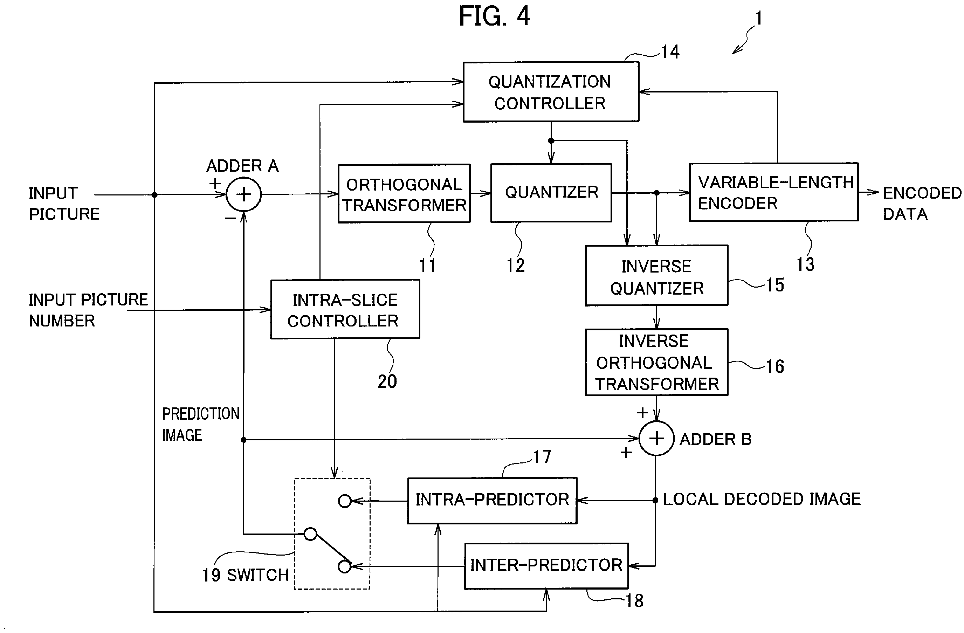

Fig. 4 is a function block diagram illustrating a configuration of a video coding device 1 of this embodiment. The video coding device 1 illustrated in Fig. 4 includes an adder A, an orthogonal transformer 11, a quantizer 12, a variable-length encoder 13, a quantization controller 14, an inverse quantizer 15, an inverse orthogonal transformer 16, an adder B, an intra-predictor 17, an inter-predictor 18, a switch 19, and an intra-slice controller 20.

The adder A subtracts a prediction image generated by the intra-predictor 17 or the inter-predictor 18 from an input picture to generate a prediction residual. The orthogonal transformer 11 performs orthogonal transformation such as the discrete cosine transform on the prediction residual, which is an output from the adder A. The quantizer 12 uses a quantization parameter outputted from the quantization controller 14 to quantize a transformation coefficient of the prediction residual on which the orthogonal transformation is performed. The variable-length encoder 13 encodes the quantized transformation coefficient of the prediction residual by a predetermined coding method that can perform invertible processing to output encoded data. The quantization controller 14 determines the quantization parameter by using the input picture, the amount of generated codes indicated by information such as the amount of data outputted by the variable-length encoder 13, and intra-slice information indicating the position and the width for inserting an intra-slice region.

The output from the quantizer 12 is inputted to both the variable-length encoder 13 and the inverse quantizer 15. The inverse quantizer 15 performs inverse quantization on the output from the quantizer 12 to decode the transformation coefficient of the prediction residual. The inverse orthogonal transformer 16 performs inverse orthogonal transformation on the output from the inverse quantizer 15 to decode the prediction residual. The adder B adds the prediction residual decoded by the inverse orthogonal transformer 16 to the prediction image generated by the intra-predictor 17 or the inter-predictor 18 to generate a local decode image.

The intra-predictor 17 generates the prediction image by performing within-image prediction (intra-prediction) based on pixel values of the local decode image using the correlation between adjacent pixels. The inter-predictor 18 generates the prediction image by performing inter-image prediction (inter-prediction) using motion information on a coding target that is detected from a previous or future frame of the local decode image.

Depending on the determination made by the intra-slice controller 20, the switch 19 switches between outputs from the intra-predictor 17 and the inter-predictor 18 for each coding target block and selectively outputs the prediction image. The video coding device 1 generates encoded data complying with the video coding standards such as H.264/AVC and H.265/HEVC, and many processings are performed in each block. When the coding target block is included in the intra-slice region, the switch 19 selects the intra-prediction. On the other hand, when no coding target block is included in the intra-slice region, the switch 19 selects the inter-prediction. When no coding target block is included in the intra-slice region, the switch 19 may switch between the intra-predictor 17 and the inter-predictor 18 depending on the prediction efficiency. The prediction image generated by the intra-predictor 17 or the inter-predictor 18 is outputted to the adders A and B.

Based on an input picture number, the intra-slice controller 20 determines whether to insert a picture for which no intra-slice is used. When the intra-slice is used, the position in which the intra-slice region is arranged and the width of the intra-slice region are determined. Hereinafter, a picture for which the intra-slice is used is referred to as an intra-slice picture, and a picture for which no intra-slice is used is referred to as a non-intra-slice picture.

Next, the operation of inserting the intra-slice region by the video coding device 1 of this embodiment is described.

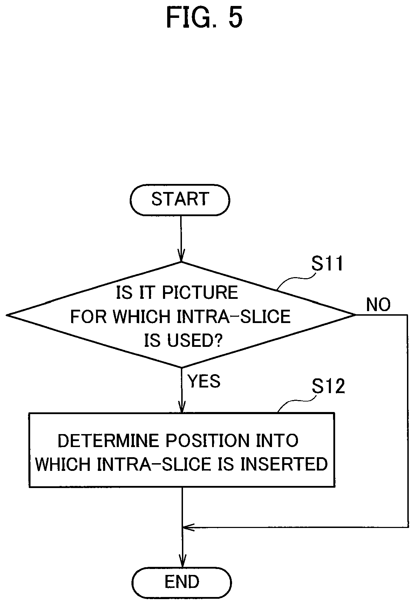

Fig. 5 is a flowchart illustrating a procedure of processing by the intra-slice controller 20.

Based on the input picture number, the intra-slice controller 20 determines whether to use the intra-slice (step S11). Specifically, the intra-slice controller 20 determines whether to use the intra-slice while inserting one non-intra-slice picture for every n input pictures (n is an integer of 2 or greater).

When it is determined to use the intra-slice, the intra-slice controller 20 determines the position into which the intra-slice region is inserted (step S12).

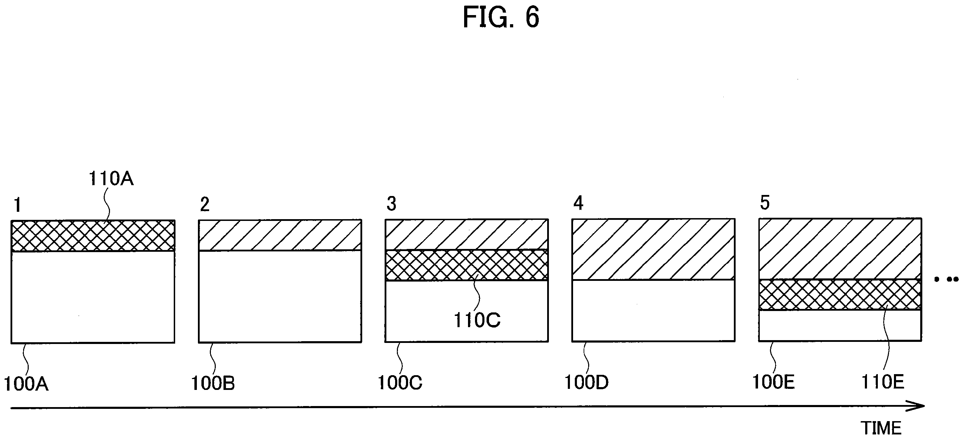

Fig. 6 illustrates an example in which one non-intra-slice picture is inserted for every two input pictures. In the example of Fig. 6, pictures 100B and 100D having even input picture numbers are the non-intra-slice pictures including no intra-slice regions. Pictures 100A, 100C, and 100E having odd input picture numbers are the intra-slice pictures including intra-slice regions 110A, 110C, and 110E. The intra-slice controller 20 sets the insertion position of the intra-slice region to a position that is displaced downward from a position into which an intra-slice region is inserted last time (a position into which an intra-slice region is inserted in the picture before last) by the width of the intra-slice region. The intra-slice controller 20 transmits the insertion position of the intra-slice region to the switch 19.

Subsequently, the operation by the switch 19 is described.

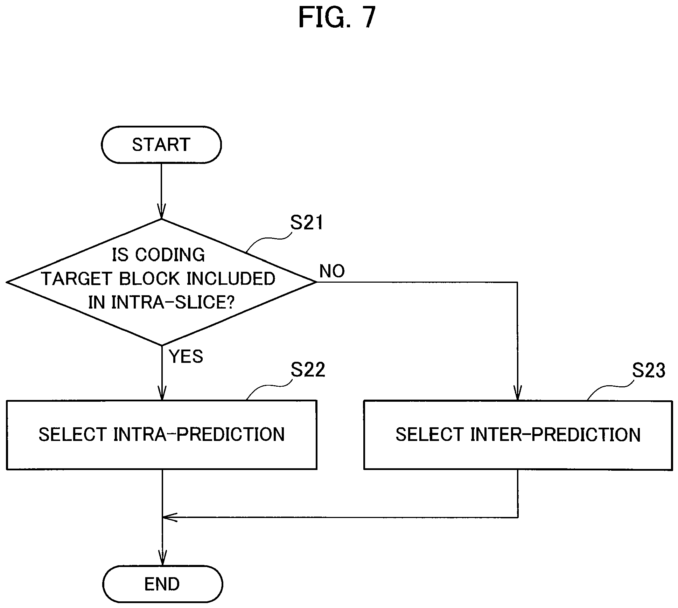

Fig. 7 is a flowchart illustrating a procedure of processing by the switch 19.

The switch 19 determines whether the coding target block is included in the intra-slice region (step S21).

When the coding target block is included in the intra-slice region, the switch 19 selects the intra-prediction and switches the input source of the switch 19 to the output of the intra-predictor 17 (step S22).

When no coding target block is included in the intra-slice region, the switch 19 selects the inter-prediction and switches the input source of the switch 19 to the output of the inter-predictor 18 (step S23).

Subsequently, the operation by the inter-predictor 18 is described.

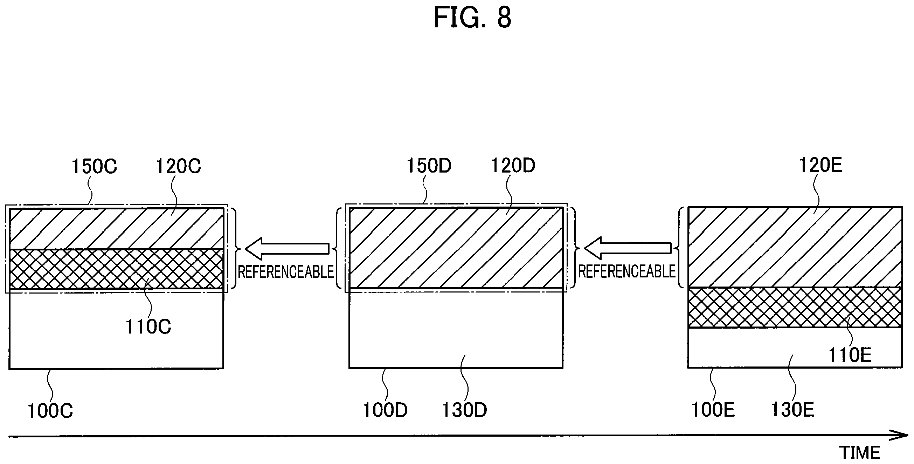

Fig. 8 is a diagram illustrating an overview of coding of the non-intra-slice picture.

In the non-intra-slice picture 100D, for an already-refreshed region 120D, the inter-predictor 18 performs the inter-prediction while allowing a reference to only a refreshed region 150C in the reference picture 100C. For an unrefreshed region 130D in the non-intra-slice picture 100D, the inter-predictor 18 performs the inter-prediction while allowing a reference to the entire region of the reference picture 100C.

In the intra-slice picture 100E referring to the non-intra-slice picture 100D, for an already-refreshed region 120E above the intra-slice region 110E, the inter-predictor 18 performs the inter-prediction while allowing a reference to only the already-refreshed region 120D in the non-intra-slice picture 100D for reference. For the intra-slice region 110E, the intra-predictor 17 performs the intra-prediction. For a region 130E below the intra-slice region 110E, the inter-predictor 18 performs the inter-prediction while allowing a reference to the entire region of the non-intra-slice picture 100D for reference.

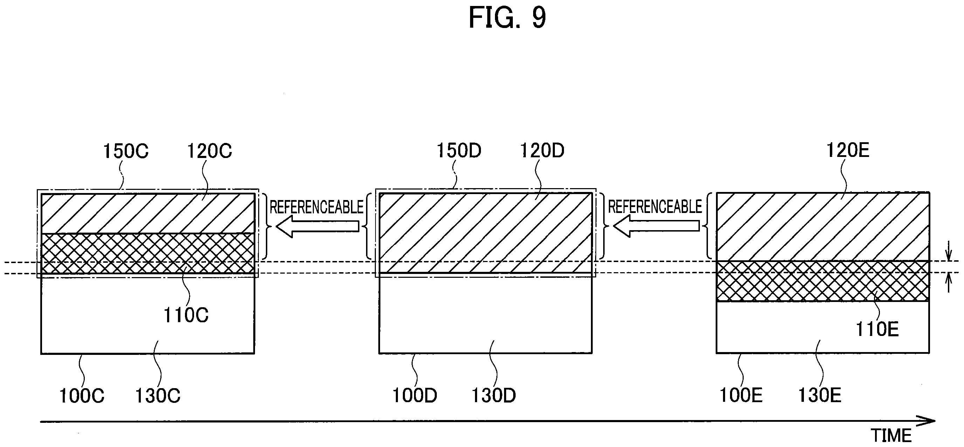

In the description with reference to Fig. 6, it is described that the intra-slice controller 20 sets the insertion position of each of the intra-slice regions 110C and 110E in the intra-slice pictures 100C and 100E to "a position that is displaced downward from a position into which an intra-slice region is inserted last time by the width of the intra-slice region." In other words, the intra-slice controller 20 sets the insertion position of each of the intra-slice regions 110C and 110E to a position in which the intra-slice regions 110C and 110E are each put in contact with the bottom of corresponding one of the previous intra-slice regions 110A and 110C but not being overlapped therewith. However, the insertion position of the intra-slice region of the present invention is not limited thereto. For example, as illustrated in Fig. 9, the insertion position of the intra-slice region 110E in the intra-slice picture 100E may be set such that the intra-slice region 110E is positioned below the intra-slice region 110C in the intra-slice picture 100C and overlapped with a part of the intra-slice region 110C. The width of the overlapping region (a region between the two broken lines in Fig. 9) of the intra-slice region 110C and the subsequent intra-slice region 110E may be set to, for example, eight pixel rows or 16 pixel rows taking account of the size of the coding block.

Although the description is omitted in Fig. 4, the video coding device 1 may include a loop filter for reducing block noise in the local decoding image in the output stage of the adder B. In the case of H.265/HEVC, the loop filter performs smoothing on pixel values in four pixels on each of the top and bottom sides (or the right and left sides) of a boundary of the coding target block. When the filtering is performed on a coding block at the lower end of the intra-slice region 110C, the loop filter performs smoothing on both pixels included in the intra-slice region 110C and pixels included in an unrefreshed region 130C. Consequently, the pixel values in the unrefreshed region 130C may be reflected in a refreshed region, and the image quality of the coding block may be deteriorated.

In view of this, for the already-refreshed region 120D in the non-intra-slice picture 100D, the inter-predictor 18 performs the inter-prediction while allowing a reference to only a region including no lowermost coding block of the refreshed region 150C in the picture 100C for reference. This makes it possible to avoid deterioration of the image quality due to the filtering.

The regions for reference in the intra-slice picture and the non-intra-slice picture in the case in which the successive intra-slice regions are overlapped with each other may be set as follows. A case of setting the width of overlapping of the intra-slice regions to eight pixel rows is described below. For a region including no lowermost eight pixel rows of the already-refreshed region 120D of the non-intra-slice picture 100D, the inter-predictor 18 performs the inter-prediction while allowing a reference to only the region including no lowermost eight pixel rows of the refreshed region 150C in the picture 100C for reference. For the unrefreshed region 130D in the non-intra-slice picture 100D and eight pixel rows above the unrefreshed region 130D, the inter-predictor 18 performs the inter-prediction while allowing a reference to the entire region of the picture 100C for reference.

In the intra-slice picture 100E referring to the non-intra-slice picture 100D, for the already-refreshed region 120E above the intra-slice region 110E, the inter-predictor 18 performs the inter-prediction while allowing a reference to only the region including no lowermost eight pixel rows of the already-refreshed region 120D in the non-intra-slice picture 100D for reference. For the intra-slice region 110E, the intra-predictor 17 performs the intra-prediction. For the region 130E below the intra-slice region 110E, the inter-predictor 18 performs the inter-prediction while allowing a reference to the entire region of the non-intra-slice picture 100D for reference.

Next, variations of the intra-slice are described.

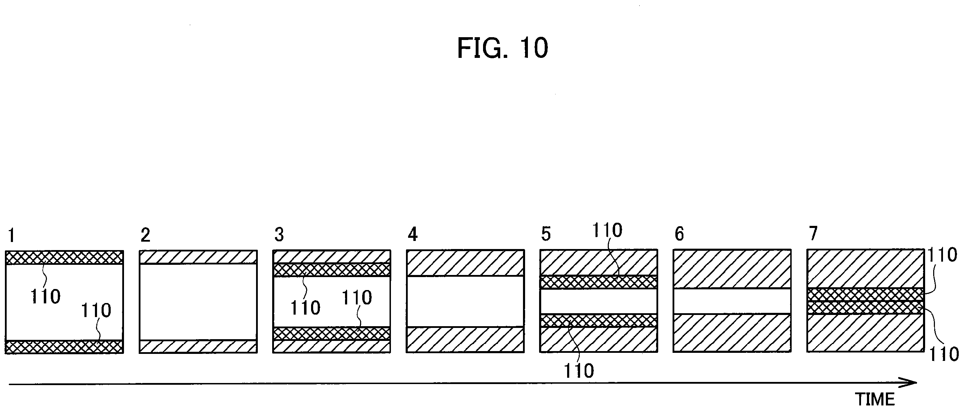

Fig. 10 is a diagram illustrating an arrangement example of the intra-slice regions.

In the example of Fig. 10, the intra-slice regions 110 are arranged so as to be moved respectively from the picture upper end and from the picture lower end toward the center of the picture. Additionally, in the example of Fig. 10, the intra-slice pictures and the non-intra-slice pictures are arranged alternately.

When the example of Fig. 10 is applied to the intra-column, intra-column regions are arranged so as to be moved respectively from the picture right end and from the picture left end toward the center of the picture.

It is possible to further reduce the refreshing time by moving the intra-slice regions 110 from the two end sides of the picture toward the center as illustrated in Fig. 10.

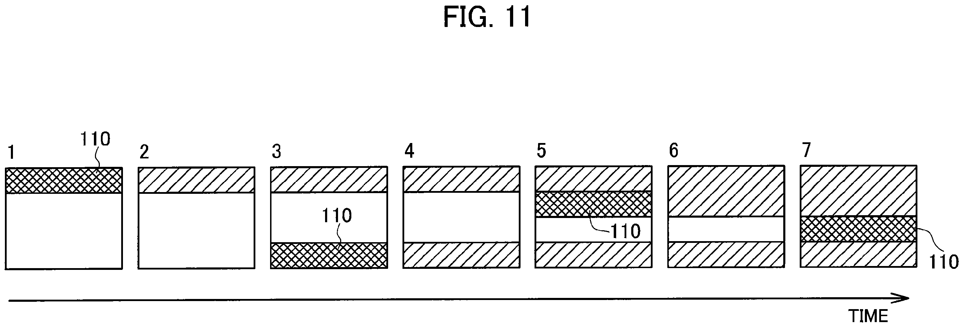

Fig. 11 is a diagram illustrating another arrangement example of the intra-slice regions.

In the example of Fig. 11, the intra-slice regions 110 are arranged such that the intra-slice region 110 moved from the picture upper end toward the center and the intra-slice region 110 moved from the picture lower end toward the center appear alternately. Additionally, the intra-slice picture and the non-intra-slice picture are arranged alternately.

When the example of Fig. 11 is applied to the intra-column, the intra-column regions are arranged such that the intra-column region moved from the picture right end toward the center and the intra-column region moved from the picture left end toward the center appear alternately.

As the intra-slice regions 110 moved from the two end sides of the picture toward the center appear alternately as illustrated in Fig. 11, the intra-slice regions 110 become less likely to continuously appear in the picture. Consequently, the moving intra-slice regions 110 becomes less likely to be visually noticed.

As described above, according to the embodiments, in the video coding device 1 using the intra-slice to move the intra-slice region in which the intra-coding is performed on a picture-by-picture basis, the intra-slice controller 20 inserts the non-intra-slice picture including no intra-slice region between the intra-slice pictures including the intra-slice regions. This reduces the number of the intra-slice pictures per unit time, and thus the difference of the image qualities between the intra-slice regions becomes less likely to be visually noticed.

### EXPLANATION OF THE REFERENCE NUMERALS

- 1: video coding device
- 11: orthogonal transformer
- 12: quantizer
- 13: variable-length encoder
- 14: quantization controller
- 15: inverse quantizer
- 16: inverse orthogonal transformer
- 17: intra-predictor
- 18: inter-predictor
- 19: switch
- 20: intra-slice controller
- A, B: adder

## Claims

1. A video coding device configured to move an intra-slice region in which a coding block is intra-coded on a picture-by-picture basis, comprising:
an intra-slice controller configured to set the intra-slice region in each intra-slice picture;
an intra-predictor configured to intra-code a coding block; and
an inter-predictor configured to inter-code a coding block, wherein
the intra-slice controller is configured to insert a non-intra-slice picture including no intra-slice region between the intra-slice pictures.

2. The video coding device according to claim 1, wherein
the inter-predictor is configured to inter-code a coding block included in a refreshed region in the non-intra-slice picture, through which the intra-slice region already passes, by referring to only a refreshed region in the intra-slice picture for reference.

3. The video coding device according to claim 1 or 2, wherein
the intra-slice controller is configured to move the intra-slice regions from respective two ends of the pictures toward the center of the pictures.

4. The video coding device according to claim 1 or 2, wherein
the intra-slice controller is configured to move the intra-slice region by arranging the intra-slice region alternately from two ends of the pictures toward the center of the pictures.

5. A method of video coding involving moving an intra-slice region in which a coding block is intra-coded on a picture-by-picture basis, comprising the steps of:
setting the intra-slice region in each intra-slice picture; and
inserting a non-intra-slice picture including no intra-slice region between the intra-slice pictures.

6. The method of video coding according to claim 5, wherein
in the non-intra-slice picture, a coding block included in a refreshed region through which the intra-slice region already passes is inter-coded by referring to only a refreshed region in the intra-slice picture for reference.

7. The method of video coding according to claim 5 or 6, wherein
the intra-slice regions are moved from respective two ends of the picture toward the center of the picture.

8. The method of video coding according to claim 5 or 6, wherein
the intra-slice regions are moved by alternately arranging the intra-slice regions from respective two ends of the picture toward the center of the picture.
